# FASCICULE DE BREVET EUROPEEN

(11) **EP 0 368 772 B1**
(45) Date de publication et mention de la délivrance du brevet: **23.06.1993**
(21) Numéro de dépôt: 89420429.6
(22) Date de dépôt: 07.11.1989
(51) Int. Cl.: A22C 17/14

(54) **Procédé de calibrage, de mesure de la longueur et de conditionnement de tronçons de boyaux utilisés en charcuterie et dispositif pour sa mise en oeuvre**
Verfahren und Vorrichtung zum Kalibrieren von Wursthüllenstücken, zur Längenmessung und Konditionierung
Method and device for calibrating, measuring the length and conditioning portions of sausage casings

(30) Priorité: 08.11.1988 FR 8815783
(43) Date de publication de la demande: 16.05.1990
(73) Titulaire: BOYAUDERIE DES ALPES, F-05140 Aspres sur Buech (FR)
(72) Inventeur: Billon-Lanfrey, Christian, F-05140 Aspres Sur Buech (FR)
(74) Mandataire: Maureau, Pierre

(56) Documents cités:
- DE-C- 247 751
- FR-A- 710 964
- FR-A- 1 087 429
- GB-A- 970 014
- US-A- 2 156 917
- US-A- 2 187 790
- US-A- 2 200 960

## Description

La présente invention a pour objet un procédé de calibrage, de mesure de la longueur et de conditionnement de tronçons de boyaux utilisés en charcuterie et un dispositif pour sa mise en oeuvre. Il est courant, dans le domaine de la charcuterie d'utiliser des boyaux de différents animaux, tels que moutons ou porcs, afin de former des enveloppes servant à la réalisation de saucisses ou de saucissons.

Le travail d'un boyau se décompose en plusieurs phases :
- La première phase consiste immédiatement après l'abattage de la bête, afin d'éviter tout risque de fermentation et de développement microbien, à étirer et à nettoyer le boyau.
- La seconde phase consiste à réaliser le raclage de la paroi interne du boyau, c'est-à-dire à la débarrasser d'une couche appelée muqueuse, et le raclage de la partie externe du boyau qui comporte une membrane protectrice afin de ne conserver que la partie centrale musculaire composée de deux plans de fibres blanches et lisses.
- La troisième phase consiste à réaliser le calibrage du boyau en fonction du diamètre de celui-ci. En effet un boyau varie en diamètre et en qualité tout au long de sa longueur, ces deux paramètres variant eux-mêmes avec l'âge, la race, le mode d'alimentation et le système d'élevage des bêtes. De façon connue, l'opération de calibrage est effectuée par gonflage du boyau à l'aide d'eau ou d'air pour en mesurer le diamètre. Dans le cas de l'eau celle-ci est déplacée de 50 cm en 50 cm pour mesurer le diamètre des différents tronçons successifs. Dans le cas de l'air, le boyau est gonflé sur toute sa longueur, les circonvolutions naturelles permettant de le conserver dans son champ de vision. C'est à l'opérateur de détecter visuellement le diamètre des boyaux, ainsi que les changements de diamètre.
   Pour faciliter son analyse, l'opérateur peut utiliser un calibre constitué par exemple par un pied à coulisse. En même temps que la détermination du diamètre, l'opérateur doit éliminer les parties de boyaux déchirées ou présentant des trous, et classer les tronçons de boyaux selon différents critères de qualité, en fonction de l'aspect du tissu et de sa solidité. A titre d'exemple il peut être noté que le boyau de mouton est calibré en diamètre de 2 mm en 2 mm, l'intestin grêle du porc de 2 mm en 2 mm ou de 3 mm en 3 mm selon les pays, l'intestin grêle du boeuf de 3 mm en 3 mm, et le gros intestin du porc ou du boeuf, de 5 mm en 5 mm.
- La quatrième phase du travail du boyau consiste à conditionner celui-ci en fonction de son calibre et de sa qualité, ce conditionnement selon des longueurs prédéterminées, étant réalisé sous forme d'échevaux salés, secs ou en saumure, ou encore par plissage sur un support tel qu'un tube rigide ou une gaine de matière synthétique souple.

Ces quatre phases successives du travail du boyau sont réalisées indépendamment les unes des autres, et de façon empirique, la qualité du résultat faisant appel essentiellement à l'expérience de l'opérateur. Il en résulte qu'il est très difficile d'obtenir un produit de qualité constante, les salaisonniers reprochant souvent aux préparateurs de commettre des erreurs de calibrage.

Le document FR-A-1 087 429 concerne un dispositif consistant à remplir un tronçon de boyau à l'aide d'un fluide, le boyau étant alors fixe, à mesurer son calibre, puis à le faire défiler avant stockage dans un récipient, avant de procéder à la mesure du tronçon suivant. Lorsqu'un changement de calibre est décelé, le boyau est coupé et le récipient recueillant les tronçons de boyaux est changé.

La présente invention vise à remédier à ces inconvénients en fournissant un procédé et un dispositif pour la mise en oeuvre de ce procédé, permettant d'automatiser les deux dernières phases de traitement du boyau, qui sont les plus délicates, en fournissant des mesures parfaitement objectives, assurant une grande régularité dans les calibres des tronçons de boyaux conditionnés, ainsi qu'une longueur précise au niveau du conditionnement.

A cet effet, ce procédé est caractérisé en ce qu'il consiste à réaliser en continu et successivement la mesure du diamètre d'un tronçon de boyau, la mesure de la longueur de celui-ci puis son conditionnement dans un ou plusieurs récipients ou sur un ou plusieurs supports correspondant à un ou plusieurs diamètres mesurés au cours de l'opération de calibrage, en ce qu'il consiste, lors de la détection d'un changement de calibre d'une valeur supérieure ou inférieure à une valeur prédéterminée, à stopper le défilement du tronçon de boyau, puis à commander l'amenée, en regard du trajet de déplacement du tronçon de boyau, d'un récipient ou d'un support correspondant au nouveau calibre mesuré, et en ce que la mesure de la longueur du tronçon de boyau est effectuée en tenant compte de la longueur des parties de différents diamètres, avec intégration de la longueur de boyau conditionné dans chaque récipient ou sur chaque support, de telle sorte que le défilement du tronçon de boyau en cours de mesure est stoppé, si la longueur de tronçons de boyau dans un récipient ou sur un support correspondant au calibre du tronçon en cours de mesure, atteint une valeur prédéterminée.

Cette technique est très avantageuse puisqu'elle réalise une interaction entre la mesure du calibre de chaque tronçon de boyau et la sélection du récipient ou du support devant recevoir ce tronçon de boyau. Ainsi, après avoir affiché les tolérances pour un calibre déterminé, il est possible d'être certain que les tronçons de boyaux fournis à tel ou tel récipient ou support correspondent bien au calibre retenu pour ce support.

En outre, le fait d'associer une mesure de longueur de défilement des tronçons de boyaux permet d'assurer le conditionnement dans chaque récipient ou sur chaque support d'une longueur absolument constante de tronçons de boyaux. C'est ainsi, par exemple que, si les tronçons de boyaux doivent être stockés avec chevauchement sur une gaine en matière synthétique souple, afin de former un article d'une longueur de 18 mètres, le défilement des tronçons de boyaux, destinés à être engagés sur la gaine considérée, cessera dès qu'une longueur de 18 mètres aura été mesurée.

Dans un dispositif pour la mise en oeuvre de ce procédé, les moyens de calibrage des tronçons de boyau sont constitués par un tube sur lequel est destiné à être engagé chaque tronçon de boyau, à l'intérieur duquel est monté un parallélogramme déformable constitué par quatre biellettes articulées autour d'axes transversaux au tube, les zones de jonctions entre deux biellettes d'une paire de biellettes étant susceptibles de faire saillie hors du tube par des fentes longitudinales que comporte celui-ci, afin de prendre appui contre la face intérieure du boyau, des moyens étant prévus pour déterminer la déformation du parallélogramme et par suite le diamètre du tronçon de boyau à mesurer.

En outre, les biellettes constitutives du parallélogramme déformable sont équipées de galets d'axes transversaux, régulièrement répartis sur leur longueur, formant organes d'appui sur le boyau.

Avantageusement, deux biellettes du parallélogramme prennent appui par leurs extrémités adjacentes sur une butée, tandis que les extrémités opposées des deux autres biellettes sont articulées sur une tige, logée axialement à l'intérieur du tube, et associée à des moyens élastiques tendant à déformer le parallélogramme dans un sens d'ouverture, un capteur déplacement linéaire étant prévu, qui mesure les mouvements de la tige à l'intérieur du tube.

Selon une caractéristique de ce dispositif, celui-ci comprend, en aval des moyens de calibrage, une roue de mesure au contact de laquelle est destiné à passer chaque tronçon de boyau à mesurer, équipée d'un système de freinage agissant en l'absence d'entraînement du boyau.

Conformément à une autre caractéristique de l'invention, les moyens de conditionnement des tronçons de boyaux sont constitués par un carrousel d'axe parallèle à la direction de défilement des tronçons de boyaux, portant un certain nombre de canules qui, parallèles à l'axe de rotation et situées à une distance de celui-ci égale à la distance entre ledit axe et l'axe de déplacement des tronçons de boyaux, correspondent chacune à un calibre de boyau, ce carrousel étant associé à des moyens d'entraînement en rotation destinés à amener dans l'axe de défilement du boyau une canule de calibre correspondant à celui du tronçon de boyau en cours de défilement.

Enfin ce dispositif comprend un calculateur permettant le paramétrage, d'une part des calibres ou plages de calibres et d'autre part du métrage désiré de chacune des canules du carrousel, recevant des informations des dispositifs de calibrage et de mesure de la longueur et commandant, après retrait des toupies d'entraînement, le mouvement du carrousel pour amener en position de chargement la canule de taille adaptée au calibre mesuré, ainsi que l'arrêt du chargement d'une canule lorsque la longueur de tronçons de boyaux engagés sur ce tube est égale à une valeur prédéterminée.

De toute façon J'invention sera bien comprise à l'aide de la description qui suit en référence au dessin schématique annexé représentant, à titre d'exemple non limitatif, une forme d'exécution de ce dispositif :
Figure 1 en est une vue de côté ;
Figure 2 est une vue partielle, en coupe longitudinale et à échelle agrandie du système de calibrage ;
Figure 3 en est une vue partielle et en coupe selon la ligne III-III de figure 1 ;
Figure 4 est une vue en coupe du système de mesure de la longueur du boyau au cours de son défilement ;
Figure 5 est une vue en coupe par un plan vertical et transversal à l'axe de défilement du boyau, du dispositif d'entraînement de celui-ci ;
Figure 6 est une vue de côté du système de conditionnement des tronçons de boyaux ;
Figures 7 et 8 sont deux vues en perspective respectivement d'une canule destinée à recevoir les tronçons de boyaux, et d'une gaine en matière synthétique souple, après chargement en tronçons de boyaux ;
Figures 9 et 10 sont deux vues de côté, dans deux positions différentes, d'une canule destinée à recevoir les tronçons de boyaux.

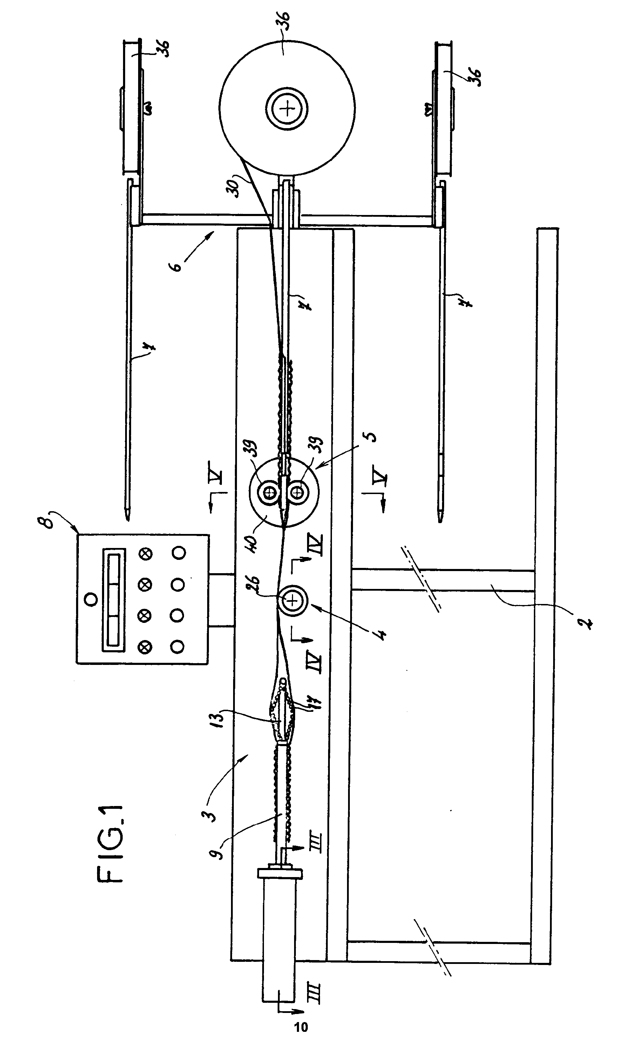

La machine représentée à la figure 1 comprend un bâti désigné par la référence 2 sur lequel sont montés les différents systèmes permettant la mise en oeuvre du procédé. La référence 3 désigne le système de calibrage, 4 désigne le système de la mesure de la longueur, 5 désigne le système d'entraînement, 6 désigne un carrousel portant des canules 7 pour le conditionnement des tronçons de boyaux, et 8 désigne un calculateur de commande automatique des différents mouvements.

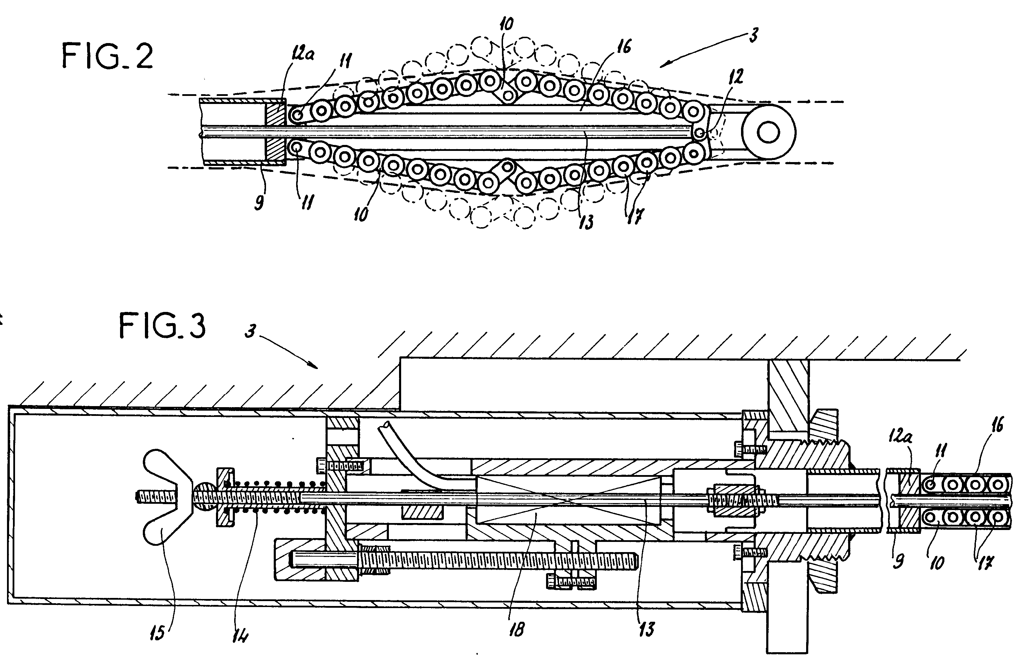

Comme montré plus spécialement aux figures 2 et 3, le système 3 de calibrage des tronçons de boyaux comprend un tube 9 fixé sur le bâti, dont l'extrémité située à droite sur le dessin est libre, permettant d'une part l'engagement des tronçons de boyaux à calibrer, et d'autre part le retrait de ceux-ci.

Comme montré aux figures 2 et 3, le tube 9 sert au logement de quatre biellettes 10 formant un parallélogramme déformable. Les deux biellettes situées d'un même côté sont articulées autour d'un axe 11, tandis que les deux biellettes situées du côté de l'extrémité libre du tube sont articulées autour d'un axe 12, à l'extrémité d'une tige 13 logée axialement à l'intérieur du tube et gui est soumise à un mouvement de traction élastique, réglable, à son autre extrémité, par l'intermédiaire d'un ressort 14 et d'un levier de réglage de tension 15 du ressort. Cette action tend à déformer le parallélogramme dans un sens d'ouverture, compte tenu de l'appui de deux biellettes contre une butée 12a, les biellettes 10 pouvant traverser des fentes 16 ménagées à cet effet dans le tube 9. Les biellettes 10 sont équipées de galets 17 formant des organes d'appui sur la face intérieure du boyau, sans risque de détérioration de celui-ci, la déformation du parallélogramme étant limitée par l'appui sur le boyau. La déformation du parallélogramme étant accompagnée d'un déplacement de la tige 13, le contrôle des mouvements de celle-ci permet de suivre l'évolution du diamètre du boyau à calibrer.

Comme montré à la figure 3, les moyens de mesure du mouvement de la tige 13 sont constitués par un capteur de déplacement linéaire désigné par la référence générale 18.

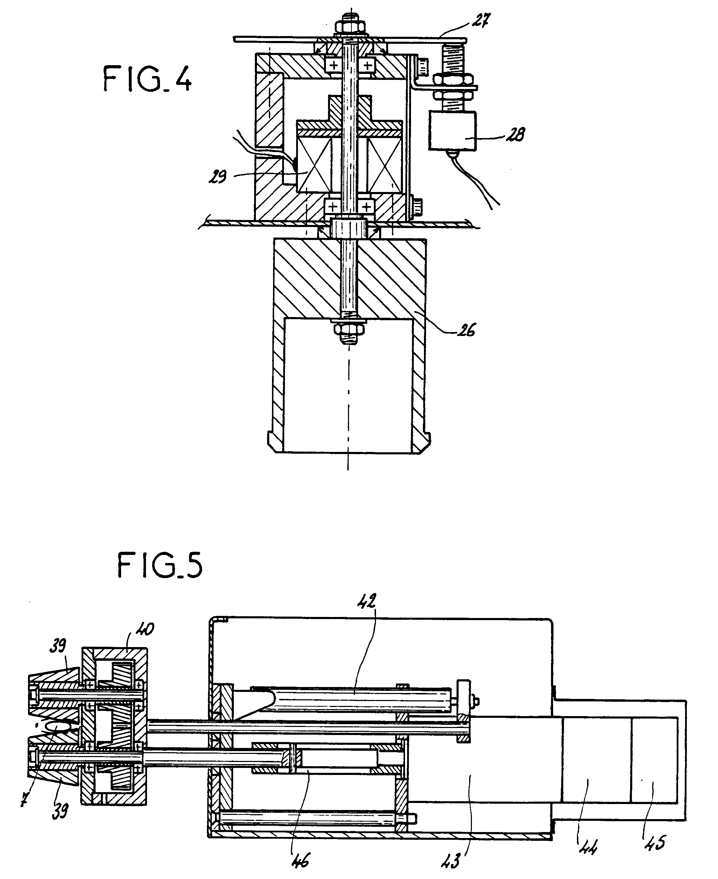

En aval du système de calibrage représenté aux figures 2 et 3, est prévu un système de mesure de la longueur de défilement du boyau constitué, comme montré à la figure 4, par une roue 26 au contact de laquelle le boyau passe sans glissement, afin de permettre son entraînement. Sur l'arbre portant la roue 26 est calé un disque 27 fournissant des impulsions lors de chaque tour de rotation à un compteur d'impulsions 28. Enfin, un frein électromagnétique 29 est associé à l'arbre portant la roue, afin d'assurer le blocage en rotation de celle-ci, dès que les moyens d'entraînement du boyau cessent d'être actionnés. Les informations de mesure de longueur fournies par la roue 26 sont transmises au calculateur 8.

Dans la forme d'exécution représentée au dessin, les tronçons de boyaux sont destinés à être conditionnés sur des gaines de matière synthétique souple 30, chaque gaine étant destinée, lors de son chargement à être fixée sur une canule 7 d'un carrousel 6. Les différentes canules associées à ce carrousel correspondent chacune à un calibre de boyau. Ce carrousel dont le mouvement est commandé par le calculateur est entraîné en rotation par un moteur 32 permettant d'amener, en regard de l'axe de défilement du boyau, la canaule 7 dont le calibre correspond au calibre mesuré du boyau en train de défiler.

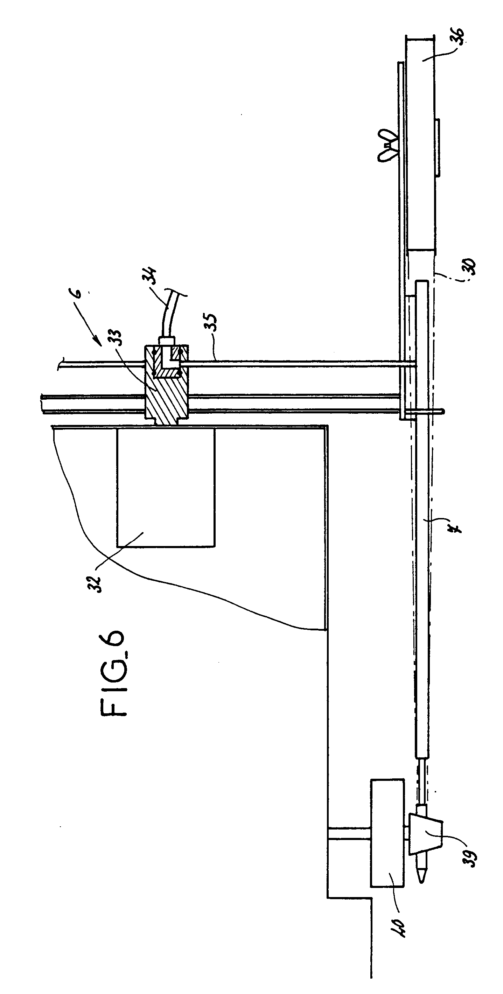

Comme montré à la figure 6, le moyeu 33 du carrousel comporte une amenée d'eau axiale 34, communiquant avec une sortie radiale 35, orientée en direction de la canule 7 en cours de chargement. Cet agencement permet grâce à cette amenée d'eau une lubrification de la canule en cours de chargement facilitant le plissement des tronçons de boyaux sur cette dernière.

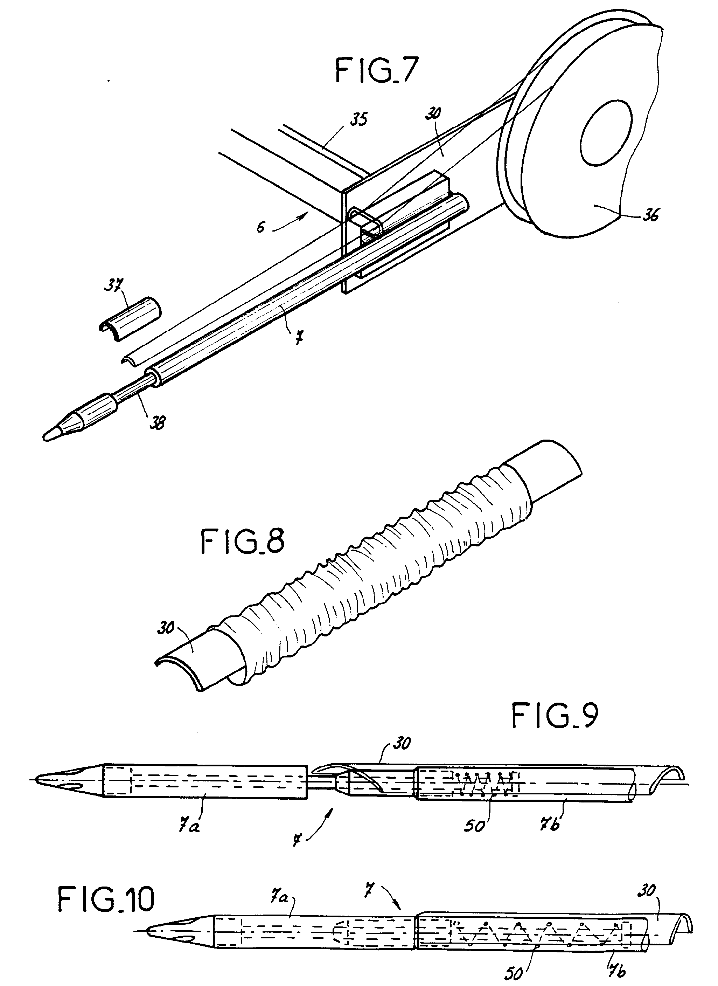

Comme représenté aux figures 6 et 7, à chaque canule 7 est associée une bobine 36 portant une succession de gaines en matière synthétique, séparées les unes des autres par des lignes de prédécoupe.

Comme montré à la figure 7, chaque gaine est positionnée sur une canule en position aplatie, à cheval sur la partie supérieure de la canule, et est maintenue par l'intermédiaire d'un clip 37 destiné à pincer l'extrémité avant de la gaine, à l'intérieur d'un évidement 38 que comporte ladite canule.

Les moyens d'entraînement en défilement du boyau sont représentés à la figure 5. Ces moyens comprennent essentiellement deux toupies coniques 39, d'axes parallèles, dont la plus petite section est tournée du côté opposé à leur support. Le support 40 des deux toupies 39 est monté déplaçable dans une direction parallèle à l'axe des toupies, ce déplacement étant réalisé à l'aide d'un vérin 42. Un moteur 43 auquel sont associés un frein 44 et une génératrice tachymétrique 45 entraîne par l'intermédiaire d'un arbre cannelé 46 les deux toupies 39 en sens inverse l'une de l'autre. En position de travail, les deux toupies 39 viennent prendre appui contre la partie avant de la canule 7 en cours de chargement et permettent l'amenée du boyau sur celle-ci. Le fait que les toupies soient coniques permet un chargement du boyau sur des canules de différentes sections, c'est-à-dire adaptées aux différents calibres. En pratique, lors du défilement du boyau les toupies 39 sont en contact d'une canule 7. Dès l'arrêt de la machine, en vue de placer une nouvelle canule en position de chargement, les toupies s'éclipsent afin de permettre une libre rotation du carrousel, avant de revenir en position de travail lorsque la canule correspondant au niveau calibre choisi se trouve en position de chargement.

Le fonctionnement de ce dispositif est le suivant : l'opérateur commence tout d'abord par charger un tronçon de boyau sur le tube de calibrage 9. L'extrémité de ce tronçon de boyau est amenée manuellement, après mesure du calibre, sur la canule de calibre correspondant, qui a elle-même été équipée d'une gaine souple. L'opérateur commande alors la mise en marche automatique de la machine. Les toupies 39 entraînent le boyau qui est plissé sur la canule 7 et sur une gaine 30 que comporte celle-ci. La mesure de la longueur du boyau qui défile est mesurée en continu par la roue 26. Si le calibre mesuré par le système 3 est absolument régulier, le défilement se produit jusqu'à ce que la roue 26 ait mesuré une longueur prédéterminée correspondant à la longueur admise pour le chargement d'une gaine souple qui est par exemple de 18 mètres.

Si au contraire, le système 3 détecte un changement de calibre, le calculateur commande l'arrêt de l'entraînement du boyau par les toupies 39, le freinage de la roue 26 par le frein 29, le retrait des toupies 39, et l'actionnement en rotation du carrousel pour amener en regard de l'axe de défilement du boyau une canule correspondant au nouveau calibre mesuré. L'opérateur coupe le tronçon de boyau et procède à son engagement sur cette nouvelle canule, puis commande la remise en marche de la machine.

Les figures 9 et 10 représentent une variante d'exécution des canules de réception 7 des tronçons de boyau, dans laquelle chaque canule comprend deux parties 7a et 7b décalées axialement l'une par rapport à l'autre et montées de façon télescopique. Les deux parties 7a et 7b sont maintenues normalement engagées l'une dans l'autre sous l'action d'un ressort 50. Lorsqu'une gaine plastique 30 est positionnée sur une canule, l'opérateur tire sur la partie 7a pour la dégager de la partie 7b avant d'introduire l'extrémité de la gaine dans l'intervalle ménagé entre les deux parties 7a et 7b, comme montré à la figure 9. L'opérateur relâche alors la partie 7a qui vient se plaquer contre celle 7b, sous l'action du ressort 50 en bloquant l'extrémité de la gaine.

Comme il ressort de ce qui précède, l'invention apporte une grande amélioration à la technique existante, en fournissant un procédé et un dispositif de conception et de structure simples, permettant de réaliser simultanément la mesure du calibre, la mesure de la longueur et le conditionnement de tronçons de boyaux.

Les moyens de mesure du calibre du boyau pourraient être différents, et constitués par exemple par une poche mise en pression pneumatiquement ou hydrauliquement, sur laquelle coulisserait le boyau, que le diamètre du boyau pourrait être mesuré à l'aide d'une série de cellules photoélectriques, que les moyens d'entraînement du boyau pourraient être différents, les toupies pouvant être fixes et les canules déplaçables axialement par rapport à celles-ci, ou encore que les moyens de conditionnement pourraient être constitués par des récipients.

## Revendications

1. Procédé de calibrage, de mesure de la longueur et de conditionnement de tronçons de boyaux utilisés en charcuterie, caractérisé en ce qu'il consiste à réaliser en continu et successivement la mesure du diamètre d'un tronçon de boyau, la mesure de la longueur de celui-ci puis son conditionnement dans un ou plusieurs récipients ou sur un ou plusieurs supports correspondant à un ou plusieurs diamètres mesurés au cours de l'opération de calibrage, en ce qu'il consiste, lors de la détection d'un changement de calibre d'une valeur supérieure ou inférieure à une valeur prédéterminée, à stopper le défilement du tronçon de boyau, puis à commander l'amenée, en regard du trajet de déplacement du tronçon de boyau, d'un récipient ou d'un support correspondant au nouveau calibre mesuré, et en ce que la mesure de la longueur du tronçon de boyau est effectuée en tenant compte de la longueur des parties de différents diamètres, avec intégration de la longueur de boyau conditionné dans chaque récipient ou sur chaque support, de telle sorte que le défilement du tronçon de boyau en cours de mesure est stoppé, si la longueur de tronçons de boyau dans un récipient ou sur un support correspondant au calibre du tronçon en cours de mesure, atteint une valeur prédéterminée.

2. Dispositif pour la mise en oeuvre du procédé selon la revendication 1, caractérisé en ce qu'il comprend successivement et d'amont en aval dans le sens de défilement des tronçons de boyaux : des moyens (3) de calibrage des tronçons de boyaux, des moyens (26) de mesure de la longueur des tronçons au cours de leur défilement, des moyens de conditionnement des tronçons de boyaux constitués par plusieurs supports (7) ou récipients interchangeables et destinés chacun à un calibre de boyau, et des moyens (39) d'entraînement en défilement au boyau.

3. Dispositif selon la revendication 2, caractérisé en ce que les moyens (3) de calibrage des tronçons de boyau sont constitués par un tube (9) sur lequel est destiné à être engagé chaque tronçon de boyau, à l'intérieur duquel est monté un parallélogramme déformable constitué par quatre biellettes articulée (10) autour d'axes transversaux au tube (9), les zones de jonctions entre deux biellettes d'une paire de biellettes étant susceptibles de faire saillie hors du tube par des fentes longitudinales que comporte celui-ci, afin de prendre appui contre la face intérieure du boyau, des moyens (12) étant prévus pour déterminer la déformation du parallélogramme et par suite le diamètre du tronçon de boyau à mesurer.

4. Dispositif selon la revendication 3, caractérisé en ce que les biellettes (10) constitutives du parallélogramme déformable sont équipées de galets (17) d'axes transversaux, régulièrement réparties sur leur longueur, formant organes d'appui sur le boyau.

5. Dispositif selon l'une quelconque des revendications 3 et 4, caractérisé en ce que deux biellettes (10) du parallélogramme prennent appui par leurs extrémités adjacentes sur une butée, tandis que les extrémités opposées des deux autre biellettes sont articulées sur une tige (12) logée axialement à l'intérieur du tube (9), et associée à des moyens élastiques tendant à déformer le parallélogramme dans un sens d'ouverture, un capteur (12) déplacement linéaire étant prévu, qui mesure les mouvements de la tige à l'intérieur du tube (9).

6. Dispositif selon l'une quelconque des revendications 2 à 5, caractérisé en ce qu'il comprend en aval des moyens de calibrage une roue de mesure (26) en contact de laquelle est destiné à passer chaque tronçon de boyau à mesurer, équipée d'un système de freinage (29) agissant en l'absence d'entraînement du boyau.

7. Dispositif selon la revendication 6, caractérisé en ce que les moyens de mesure de la longueur des tronçons de boyaux sont constitués par un compteur à impulsions (28) mesurant le nombre de tours de la roue, tandis que le système de freinage (29) est de type électromagnétique.

8. Dispositif selon l'une quelconque des revendications 2 à 7, caractérisé en ce que les moyens de conditionnement des tronçons de boyaux sont constitués par un carrousel (6) d'axe parallèle à la direction de défilement des tronçons de boyaux, portant un certain nombre de canules (7) qui, parallèles à l'axe de rotation et situées à une distance de celui-ci égale à la distance entre ledit axe et l'axe de déplacement des tronçons de boyaux, correspondent chacune à un calibre de boyau, ce carrousel (6) étant associé à des moyens d'entraînement en rotation destinés à amener dans l'axe de défilement du boyau une canule de calibre correspondant à celui du tronçon de boyau en cours de défilement.

9. Dispositif selon la revendication 8, caractérisé en ce que les moyens d'entraînement en défilement du boyau sont constitués par deux toupies coniques (39), dont l'une au moins est entraînée en rotation, disposées de part et d'autre de la canule (7) en position de chargement, pour pouvoir prendre appui sur cette dernière, les deux toupies étant montées sur un support (40) déplaçable dans une direction parallèle à l'axe des toupies, les moyens de déplacement du support étant agencés pour dégager les toupies vis-à-vis de la canule en position de remplissage avant mise en rotation du carrousel.

10. Dispositif selon l'une quelconque des revendications 8 et 9, caractérisé en ce que le carrousel (6) est équipé d'une amenée d'eau centrale (34) comportant une sortie radiale (35) destinée à alimenter en eau la seule canule (7) en position de remplissage en tronçons de boyaux.

11. Dispositif selon l'une quelconque des revendications 8 à 10, caractérisé en ce que chaque canule (7) comporte à proximité de son extrémité avant, c'est-à-dire celle située du côté de l'amenée des tronçons de boyaux, un évidement (38) destiné à l'engagement d'un clips de blocage (37) d'une gaine souple (30) de conditionnement des tronçons de boyaux, préalablement mise à plat et disposée à cheval sur la zone supérieure de la canule permettant le passage du boyau sur la gaine.

12. Dispositif selon l'une quelconque des revendications 8 à 10, caractérisé en ce que chaque canule (7) comprend deux parties (7a) et (7b) décalées axialement, normalement maintenues en contact sous l'action d'un ressort (50), et déplaçables axialement à l'encontre de l'action de ce ressort pour dégager un interstice dans lequel peut être bloquée l'extrémité d'une gaine souple destinée à recevoir un tronçon de boyau.

13. Dispositif selon l'ensemble des revendications 2 à 12, caractérisé en ce qu'il comprend un calculateur (8) permettant le paramétrage d'une part des calibres ou plages de calibres et d'autre part du métrage désiré de chacune des canules du carrousel, recevant des informations des dispositifs de calibrage (3) et de mesure (4) de la longueur et commandant, après retrait des toupies d'entraînement le mouvement du carrousel (6) pour amener en position de chargement la canule (7) de taille adaptée au calibre mesuré, ainsi que l'arrêt du chargement d'une canule lorsque la longueur de tronçons de boyaux engagés sur ce tube est égale à une valeur prédéterminée.

## Claims

1. Method of gauging, measuring the length and packaging gut sections used in the delicatessen trade, characterised in that it consists in measuring continuously and successively the diameter of a gut section, measuring its length, and then packaging it in one or a plurality of containers on one or a plurality of supports corresponding to one or a plurality of diameters measured during the gauging operation; in that, when a change of gauge of a value which is greater or less than a predetermined value is detected, it consists in halting the advance of the gut section, then of bringing a container or support corresponding to the new calibration measured, opposite the displacement path of the gut; and in that the length of the gut section is measured taking into account the length of the parts of various diameters, and the length of gut packaged in each container or on each support is integrated, such that the advance of the gut section being measured is halted if the length of the gut sections in a container or on a support corresponding to the gauging of the section being measured reaches a predetermined value.

2. Device for implementing the method according to Claim 1, characterised in that it comprises in succession upstream and downstream of the advance direction of the gut sections: means (3) for gauging the gut sections, means (26) for measuring the length of the sections as they advance, means for packaging the gut sections, consisting of a plurality of interchangeable supports (7) or containers, each of which is intended for one gut gauge, and means (39) for advancing the gut.

3. Device according to Claim 2, characterised in that the means (3) for gauging the gut sections consist of a tube (9) on which each section of gut is to be engaged, and inside which there is mounted a deformable parallelogram consisting of four links (10) articulated about axes transverse to the tube (9), and the connection areas between two links of a link pair can project outside the tube through longitudinal slots in the latter, in order to rest against the inner surface of the gut, means (18) being provided in order to determine the deformation of the parallelogram and thus the diameter of the gut section to be measured.

4. Device according to Claim 3, characterised in that the links (10) which constitute the deformable parallelogram are provided with rollers (17) which have transverse axes and are spaced regularly along the length thereof, thus forming support units on the gut.

5. Device according to either of Claims 3 and 4, characterised in that two links (10) of the parallelogram are supported by means of their adjacent ends on a stop, whereas the opposite ends of the two other links are articulated on a rod (12) accommodated axially inside the tube (9), and associated with resilient means which tend to deform the parallelogram in an opening direction, a linear displacement probe (18) being provided in order to measure the movements of the rod inside the tube (9).

6. Device according to any one of Claims 2 to 5, characterised in that downstream of the calibration means it comprises a measuring wheel (26) with which each gut section to be measured is intended to come into contact, and which is provided with a braking system (29) which operates when the gut is not advancing.

7. Device according to Claim 6, characterised in that the means for measuring the length of the gut sections consist of a pulse counter (28) which measures the number of revolutions of the wheel, whereas the braking system (29) is of the electromagnetic type.

8. Device according to any one of Claims 2 to 7, characterised in that the means for packaging the gut sections consist of a turntable (6) of which the axis is parallel to the advance direction of the gut sections, and which supports a given number of nozzles (7) which, parallel to the axis of rotation and disposed at a distance from the latter equal to the distance between the said axis and the axis of displacement of the gut sections, each correspond to a gut gauge, this turntable (6) being associated with rotary drive means for bringing a nozzle of the gauge corresponding to that of the section of advancing gut, into the advance axis of the gut.

9. Device according to Claim 8, characterised in that the drive means for advancing the gut consist of two conical shapers (39), of which one at least is rotated, and which are disposed on either side of the nozzle (7) in the loading position, in order to be able to rest on the nozzle, the two shapers being mounted on a support (40) which can be displaced in a direction parallel to the'axis of the shapers, the displacement means of the support being arranged so as to release the shapers opposite the nozzle in the filling position, before the turntable is rotated.

10. Device according to either of Claims 8 and 9, characterised in that the turntable (6) is provided with a central water supply (34) comprising a radial outlet (35) for supplying water to only the nozzle (7) which is in the gut section filling position.

11. Device according to any one of Claims 8 to 10, characterised in that in the vicinity of its front end, ie the end disposed on the gut section supply side, each nozzle (7) has a recess (38) for engaging a locking clip (37) of a resilient sheath (30) for packaging the gut sections, which sheath has previously been flattened and disposed so as to straddle the upper area of the nozzle, thus permitting the gut to be passed onto the sheath.

12. Device according to any one of Claims 8 to 10, characterised in that each nozzle (7) comprises two parts (7a) and (7b) which are axially offset, are normally maintained in contact by the action of a spring (50), and can be axially displaced against the action of this spring, in order to open up a gap in which the end of a resilient sheath intended to receive a gut section can be locked.

13. Device according to all of Claims 2 to 12, characterised in that it comprises a computer (8) in order to determine the parameters on the one hand of the gauges or gauge ranges, and on the other hand of the required measurement of each of the nozzles in the turntable, receiving information from the devices for gauging (3) and measuring (4) the length, and after the advance shapers have withdrawn, moving the turntable (6) in order to bring the nozzle (7) of the size suitable for the gauge measured into the loading position, as well as stopping loading of a nozzle when the length of the gut sections engaged on this tube is equal to a predetermined value.

## Patentansprüche

1. Verfahren zum Kalibrieren, zur Längenmessung und zur Konditionierung von im Metzgereiwesen verwendeten Darmstücken, dadurch gekennzeichnet, daß es auf der kontinuierlichen und aufeinanderfolgenden Durchführung der Messung des Durchmessers eines Darmstückes, der Messung der Länge desselben, außerdem seiner Konditionierung in einem oder mehreren Behältnissen oder auf einem oder mehreren Trägern, die mit einem oder mehreren während der Durchführung der Kalibrierung gemessenen Durchmessern korrespondieren, beruht, daß es darauf beruht, anläßlich der Detektion einer Veränderung des Durchmessers von einem vorherbestimmten Wert zu einem höheren oder niedrigeren Wert die Voranbewegung des Darmstückes zu stoppen, außerdem die Zuführung eines mit-dem neuen gemessenen Durchmesser korrespondierenden Behältnisses oder Trägers bezüglich des Verlagerungsweges des Darmstückes herbeizuführen, und daß die Messung der Länge des Darmstückes durchgeführt wird unter Berücksichtigung der Länge der Partien mit unterschiedlichen Durchmessern, unter Einbeziehung der Länge des in jedem Behältnis oder auf jedem Träger konditionierten Darmes, derart, daß die Voranbewegung des bei der Messung befindlichen Darmstückes gestoppt wird, wenn die Darmstücklänge in bzw. auf einem mit dem Durchmesser des bei der Messung befindlichen Stückes korrespondierenden Behältnis oder Träger einen vorherbestimmten Wert erreicht.

2. Vorrichtung zur Durchführung des Verfahrens gemäß Anspruch 1, dadurch gekennzeichnet, daß es aufeinanderfolgend und stromabwärts in Richtung der Voranbewegung der Darmstücke folgendes umfaßt: Mittel (3) zum Kalibrieren der Darmstücke, Mittel (26) zum Messen der Länge der Stücke während ihrer Voranbewegung, Mittel zum Konditionieren der Darmstücke, gebildet von mehreren austauschbaren Trägern (7) oder Behältnissen und jeweils für einen Darmdurchmesser bestimmt, und Mittel (39) zur Erzeugung der Darm-Vorschubbewegung.

3. Vorrichtung gemäß Anspruch 2, dadurch gekennzeichnet, daß die Mittel (3) zum Kalibrieren der Darmstücke von einem Rohr (9) gebildet sind, auf dem jedes Darmstück zur Anordnung vorgesehen ist, im Innern dessen ein verformbares Parallelogramm angeordnet ist, das von vier um transversal zum Rohr (9) verlaufende Achsen verschwenkbaren Schwenkarmen (10) gebildet ist, wobei die Verbindungsbereiche zwischen zwei Schwenkarmen eines Schwenkarm-Paares fähig sind, durch Längsschlitze, die das Rohr aufweist, nach außerhalb des Rohres hervorzutreten, um gegen die Innenfläche des Darmes anzuliegen, wobei Mittel (18) vorgesehen sind, um die Verformung des Parallelogrammes und in der Folge den Durchmesser des zu messenden Darmstückes zu bestimmen.

4. Vorrichtung gemäß Anspruch 3, dadurch gekennzeichnet, daß die das verformbare Parallelogramm bildenden Schwenkarme (10) mit über ihre Länge regelmäßig verteilten Rollenkörpern (17) mit transversalen Achsen ausgestattet sind, die Organe zur Anlage an dem Darm bilden.

5. Vorrichtung gemäß einem beliebigen der Ansprüche 3 und 4, dadurch gekennzeichnet, daß sich zwei Schwenkarme (10) des Parallelogrammes mit ihren benachbarten Enden an einem Lager abstützen, während die entgegengesetzten Enden der beiden anderen Schwenkarme an einer axial im Innern des Rohres (9) angeordneten Stange (13) verschwenkbar sind und mit elastischen Mitteln assoziiert sind, die danach streben, das Parallelogramm in einem Öffnungssinne zu verformen, wobei ein Linearbewegungsaufnehmer (18) vorgesehen ist, der die Bewegungen der Stange im Innern des Rohres (9) erfaßt.

6. Vorrichtung gemäß einem beliebigen der Ansprüche 2 bis 5, dadurch gekennzeichnet, daß sie stromab der Mittel zur Kalibrierung einen Meßradkörper (26) umfaßt, in Kontakt mit welchem sich jedes zu messende Darmstück vorbeizubewegen hat, und der mit einem Bremssystem (29) ausgestattet ist, das bei Nichtantrieb des Darmes arbeitet.

7. Vorrichtung gemäß Anspruch 6, dadurch gekennzeichnet, daß die Mittel zur Messung der Länge der Darmstücke von einem Impulszähler (28) gebildet sind, der die Anzahl der Umdrehungen des Radkörpers mißt, während das Bremssystem (29) elektromagnetischer Art ist.

8. Vorrichtung gemäß einem beliebigen der Ansprüche 2 bis 7, dadurch gekennzeichnet, daß die Mittel zur Konditionierung der Darmstücke von einem Karussell (6) mit zur Richtung der Voranbewegung der Darmstücke paralleler Achse gebildet sind, das eine gewisse Anzahl zur Drehachse paralleler und in einer dem Abstand zwischen besagter Achse und der Verlagerungsachse der Darmstücke entsprechenden Entfernung zu dieser angeordneter Dorne bzw. Kanülen (7) trägt, die jeweils mit einem Darmdurchmesser korrespondieren, wobei besagtes Karussell (6) mit Drehantriebsmitteln assoziiert ist, die dazu bestimmt sind, in die Achse der Voranbewegung des Darmes eine Kanüle zuzuführen, deren Durchmesser mit demjenigen des sich in Voranbewegung befindenden Darmstückes korrespondiert.

9. Vorrichtung gemäß Anspruch 8, dadurch gekennzeichnet, daß die Antriebsmittel zur Erzeugung der Voranbewegung des Darmes von zwei konischen Drehköpfen (39) gebildet sind, von denen wenigstens einer drehangetrieben ist, und die beiderseits der in Bestückungsposition befindlichen Kanüle (7) angeordnet sind, um sich gegen diese letztgenannte abstützen zu können, wobei die beiden Drehköpfe an einem Träger (40) angeordnet sind, der in einer zur Achse der Drehköpfe parallelen Richtung bewegbar ist, und wobei die Mittel zur Bewegung des Trägers angeordnet sind, um die Drehköpfe gegenüber der in Bestückungsposition befindlichen Kanüle zu entfernen, bevor das Karussell in Drehung versetzt wird.

10. Vorrichtung gemäß einem beliebigen der Ansprüche 8 und 9, dadurch gekennzeichnet, daß das Karussell (6) mit einer zentralen Wasserzuführung (34) ausgestattet ist, die einen radialen Ausgang (35) umfaßt, der dazu bestimmt ist, die einzige in der Position zur Bestückung mit Darmstücken befindliche Kanüle mit Wasser zu versorgen.

11. Vorrichtung gemäß einem beliebigen der Ansprüche 8 bis 10, dadurch gekennzeichnet, daß jede Kanüle (7) in der Nähe ihres vorderen Endes, d.h. des Endes, das sich auf der Zuführseite der Darmstücke befindet, einen Ausnehmung (38) umfaßt, die für den Angriff eines Befestigungsclips (37) für eine nachgiebige Hülle (30) zur Konditionierung der Darmstücke bestimmt ist, die zuvor abgeplattet und querüber auf der oberen Zone der Kanüle, das Aufbringen des Darmes auf die Hülle erlaubend, angeordnet ist.

12. Vorrichtung gemäß einem beliebigen der Ansprüche 8 bis 10, dadurch gekennzeichnet, daß jede Kanüle (7) zwei axial versetzte Partien (7a) und (7b) umfaßt, die normalerweise unter der Einwirkung einer Federkraft (50) in Kontakt gehalten werden, und die axial entgegen der Wirkung dieser Federkraft bewegbar sind, um einen Zwischenraum freizulegen, in welchem das Ende einer zur Aufnahme eines Darmstückes bestimmten nachgiebigen Hülle festgelegt werden kann.

13. Vorrichtung gemäß der Gesamtheit der Ansprüche 2 bis 12, dadurch gekennzeichnet, daß sie einen Rechner (8) umfaßt, der die Parameterisierung einerseits von Durchmessern oder Durchmesserbereichen und andererseits von Längenabmessungen, die für jede Kanüle des Karussells gewünscht sind, erlaubt, der Informationen bezüglich der Vorrichtungen zur Kalibrierung (3) und zur Längenmessung (4) enthält, und der nach dem Wegnehmen der Antriebsdrehköpfe die Bewegung des Karussells steuert, um die Kanüle (7) mit auf den gemessenen Durchmesser abgestimmter Größe in die Bestückungsposition zu verbringen, sowie das Stoppen der Beschickung einer Kanüle steuert, wenn die Länge der auf diesem Rohr angeordneten Darmstücke gleich einem vorherbestimmten Wert ist.
